# EUROPÄISCHE PATENTSCHRIFT

(11) **EP 0 773 615 B1**
(45) Veröffentlichungstag und Bekanntmachung des Hinweises auf die Patenterteilung: **15.03.2000**
(21) Anmeldenummer: 96117957.9
(22) Anmeldetag: 08.11.1996
(51) Int. Cl.: H02B 1/00, H02B 1/30, H02B 1/01, F16B 12/50

(54) **Schaltschrank für elektrische Anlagen**
Switchgear cabinet for electrical installations
Armoire de commutation pour installation électrique

(30) Priorität: 09.11.1995 DE 29517682 U
(43) Veröffentlichungstag der Anmeldung: 14.05.1997
(73) Patentinhaber: ELEK GMBH, D-41470 Neuss (DE)
(72) Erfinder: Rübsam Hans J., D-40670 Meerbusch (DE); Obommer Nikolaus, D-41517 Grevenbroich (DE)
(74) Vertreter: Palgen, Peter, Dr. Dipl.-Phys.

(56) Entgegenhaltungen:
- DE-A- 2 657 454
- DE-A- 4 135 108
- DE-U- 9 209 885
- FR-A- 2 190 191
- GB-A- 2 232 426

## Beschreibung

Die Erfindung bezieht sich auf einen Schaltschrank der dem Oberbegriff des Anspruchs 1 entsprechenden Art.

Schaltschränke dieser Art dienen bei Schaltanlagen dazu, Schaltgeräte und Schaltelemente, die beispielsweise Schütze, Sicherungselemente oder dergleichen oder auch Anzeigeinstrumente, die beispielsweise den Betriebszustand nachgeschalteter Verbraucher charakterisieren, aufzunehmen und übersichtlich und gut zugänglich an einem im Schaltgehäuse aufgestellten und an diesem befestigten Geräteträger anordnen zu können.

An die technischen Ausführungen von Schaltschränken werden besondere Anforderungen gestellt. Wegen der Vielfalt möglicher Anwendungen müssen die Schrankgehäuse möglichst variabel aufbaubar sein, um die für den individuellen Einsatzzweck erforderliche Gerätekonstellation optimal aufnehmen zu können. Gleichermaßen muß der Schaltschrank insgesamt eine möglichst große Stabilität aufweisen, da insbesondere durch eingebaute elektrische Geräte hohen Eigengewichts sowie durch von Hand zu betätigende Schaltelemente, die teilweise erhebliche Betätigungskräfte erfordern, die mechanischen Belastungen eines Schaltschranks erheblich sind.

Aus der DE-OS 26 57 454 ist ein variables Gehäusegerüst zum Einsatz in elektrotechnischen Anlagen bekannt, welches im wesentlichen aus gelochten Tragteilen und Eckverbindern besteht, wobei die Tragteile als langgestreckte Hohlprofilkörper mit einem im wesentlichen rechteckigen Querschnitt ausgebildet sind, bei dem ein Eckbereich gegenüber den Seiten des Rechtecks nach außen versetzt ist und die Eckverbinder aus einem Verbindungsteil und drei Schenkeln bestehen, die jeweils ein dem Profil der Tragteile angepaßtes L-Profil besitzen.

Zwar ist ein mit diesem variablen Gehäusegerüst ausgestatteter Schaltschrank durch die gelochten Tragteile bereits sehr flexibel in seinem Aufbau, es hat sich jedoch gezeigt, daß die Stabilität eines solchen Schaltschranks verbesserungsfähig ist.

Ferner ist aus der DE 92 09 885 U1 ein Konstruktionssystem zum erstellen von im wesentlichen geradlinig begrenzten Raumkonstruktionen bekannt, welches Mehrkammer-Hohlprofile umfaßt, die mit sogenannten Kupplungskörpern miteinander verbindbar sind. Diese Kupplungskörper weisen in jeder Raumrichtung, in der ein Profil festlegbar sein soll, einen Schenkel auf, der in das Innenvolumen einer Kammer des Profils einführbar ist.

Für den Aufbau des Rahmens eines elektrischen Schaltschranks ist dieses Konstruktionssystem nicht geeignet.

Der Erfindung liegt daher die Aufgabe zugrunde, einen gattungsgemäßen Schaltschrank derart weiterzuentwickeln, daß dieser besonders hoch belastbar ist, ohne daß hierdurch seine Variabilität eingeschränkt und sein Aufbau verkompliziert werden.

Diese Aufgabe wird durch die in Anspruch 1 wiedergegebene Erfindung gelöst.

Dadurch, daß die in die Enden der Stützen und Holme eingreifenden Schenkel der Eckverbinder ein im Querschnitt der Stützen und Holme angepaßtes Profil aufweisen, derart, daß die Schenkel sowohl in den dem Gehäuseinnern zugewandten Teil des Querschnitts als auch in den bezüglich des Gehäuseinnern nach außen versetzten Eckbereich der Stützen und Holme eingreifen, wird die Torsionssteifigkeit der vertikalen Stützen und waagerechten Holme im Verbindungsbereich mit den Eckverbindern erheblich erhöht. Allein der so aufgebaute Rahmen verleiht dem Schaltschrank eine sehr hohe Stabilität, so daß nachträglich einzusetzenden weiteren Bauteilen, insbesondere den Seitenteilen, dem Boden und dem Deckel keine tragenden Funktionen mehr zukommen, wodurch diese in ihrem Aufbau und in ihrer Befestigung besonders einfach gehalten werden können.

Bei einer bevorzugten Ausführungsform sind die Gehäusewandungen derart bemessen, daß sie in die jeweils von den nach außen versetzten Eckbereichen begrenzten Ausschnitte des Rahmens einsetzbar sind. Durch diese Maßnahme wird einerseits ein besonders gefälliges Äußeres des Schaltschranks bewirkt, da lediglich ein geringer Profilquerschnitt - nämlich derjenige der nach außen versetzten Eckbereiche - optisch sichtbar ist, zum anderen dienen die dem Gehäuseinnern zugewandten Teile des Querschnitts gleichzeitig als Anlagefläche für die Gehäusewandungen, so daß diese sich beim Einsetzen selbstätig ausrichten.

In diesem Zusammenhang ist es besonders vorteilhaft, wenn der Eckbereich senkrecht zur jeweils angrenzenden Gehäusewandung verlaufende Profilabschnitte aufweist. Einerseits sind durch diese Maßnahme die für die Gehäusewandungen vorgesehenen Ausschnitte des Rahmens besonders scharf begrenzt, andererseits können hierdurch die Randbereiche der Seitenteile um 90° nach innen abgekantet werden, wodurch die die Gehäusewandungen bildenden Bauteile eine erheblich höhere Eigenstabilität erhalten und somit leichter handhabbar sind.

Bei einer ersten bevorzugten Ausführungsform des Schaltschranks weist der Eckbereich einen im wesentlichen quadratischen Querschnitt auf.

Es ist jedoch ebenfalls möglich, dem Querschnitt des Eckbereichs etwa die Form eines Viertelkreises zu verleihen, derart, daß die gewölbte Fläche nach außen gerichtet ist. Das optische Erscheinungsbild des Schaltschranks läßt sich hierdurch verändern, ohne daß dies zu Einbußen an seiner Stabilität führt.

Eine besonders hohe Steifigkeit weisen die Stützen und Holme dann auf, wenn der dem Gehäuseinnern zugewandte Teil ihres Querschnitts einen im wesentlichen quadratischen Querschnitt aufweist.

Besonders bevorzugt, da durch die Symmetrie variabel an verschiedenen Rändern einsetzbar und besonders kostengünstig herstellbar sind Stützen und Holme, bei denen jeweils eine Diagonale des dem Gehäuseinnern zugewandten Teils des Querschnitts und des Eckbereichs auf einer gemeinsamen Geraden liegen.

Besonders günstig während ihres Herstellungsprozesses und beim späteren Einbau handhabbar sind die Eckverbinder dann, wenn sie je Stütze bzw. Holm zwei separate Schenkel umfassen, von denen der eine in den dem Gehäuseinnern zugewandten Teil des Querschnitts, der andere in den Eckbereich eingreift.

Bei einer besonders bevorzugten Ausführungsform des Schaltschranks sind an einander gegenüberliegenden Seiten zweier benachbarter Stützen oder Holme sich im wesentlichen über die gesamte Länge des dem Gehäuseinnern zugewandten Teils der Stütze oder des Holmes erstreckende Profilvorsprünge vorgesehen. Diese Profilvorsprünge dienen der Anbringung von Tragschienen zur Montage eines für die Aufnahme von Schaltelementen vorgesehenen Geräteträgers.

Besonders vorteilhaft ist es daher, wenn jeweils zwei benachbarte Profilvorsprünge derart einander zugewandt sind, daß diese auf einer gemeinsamen Ebene liegen, die parallel zu einer Schmalseite des Gehäuses verläuft.

Bezüglich der Variabilität des Schaltschranks ist es von Vorteil, wenn die Profilvorsprünge mit einer regelmäßigen Lochreihe versehen sind.

Um möglichst variabel weitere, der Aufnahme von Schaltelementen und dergleichen dienende Längs- oder Querträger montieren zu können, ist es von Vorteil, wenn die Seiten der dem Gehäuseinnern zugewandten Teile der Rahmenprofile regelmäßige Lochreihen aufweisen.

Vorzugsweise besteht zumindest ein Teil dieser Lochreihen aus abwechselnd angeordneten kreisrunden und rechteckigen Lochungen, da hierdurch einerseits die Gefahr eines versehentlich schrägen Einbaus eines einzubauenden Holmes oder einer Strebe vermindert wird, andererseits die Lochungen rechteckigen Querschnitts besonders für die Verwendung von Schnellbefestigungsvorrichtungen zur Montage weitere Bauteile geeignet ist.

Bei der bevorzugten Ausführungsform des Schaltschranks, die sich durch eine besonders einfache und schnelle Montierbarkeit auszeichnet, weisen die in den dem Gehäuseinnern zugewandten Teil der Stützen und Holme eingreifenden Schenkel der Eckverbinder zumindest eine im Querschnitt kreisrunde Lochung auf, die mit einer kreisrunden Lochung des Profils kommuniziert. Zur Fixierung der Eckverbinder in den Stützen und Holmen dient dann ein in diese Lochungen eingeführter Klemmstift.

In der Zeichnung sind Ausführungsbeispiele der Erfindung illustriert.

Es zeigen:
Fig. 1 den Rahmen eines erfindungsgemäßen Schaltschranks in einer perspektivischen Darstellung, dessen Frontseite durch zusätzlich eingesetzte Längs- und Querträger für den Einsatz bestimmter Schaltelemente vorbereitet ist;
Fig. 2 - perspektivisch - einen Bereich eines Eckverbinders einer ersten Ausführungsform im Ausschnitt, wobei die untere Strebe von den Schenkeln des Eckverbinders abgezogen ist;
Fig. 3a bis 3d eine zweite Ausführungsform eines Eckverbinders in verschiedenen Ansichten;
Fig. 4 eine Ansicht eines in ein Rahmenprofil eingeführten Eckverbinders seitens des offenen Endes des Rahmenprofils;
Fig. 5 einen vertikalen Schnitt durch einen bereits mit Seitenwänden versehenen Schaltschrank;
Fig. 6 einen Querschnitt durch einen Holm bzw. eine Stütze im Bereich eines Befestigungselements für eine Seitenwandung;
Fig. 7 einen Arretiereinsatz einer Schnellbefestigungseinrichtung;
Fig. 8 das Verriegelungselement der Schnellbefestigungsvorrichtung sowie
Fig. 9a und b eine montierte Schnellbefestigungsvorrichtung mit entriegeltem bzw. verriegeltem Verriegelungselement.

Wenn im Folgenden von "vorn" die Rede ist, so bezieht sich die Angabe auf die einem Verwender üblicherweise zugewandte Frontseite des Schaltschranks. Die Angaben "links" und "rechts" beziehen dementsprechend auf den Betrachtersinn eines die Frontseite betrachtenden Verwenders, die Angaben "oben" und "unten" beziehen sich auf einen Schaltschrank, welcher sich in seiner aufrechten Betriebsposition befindet.

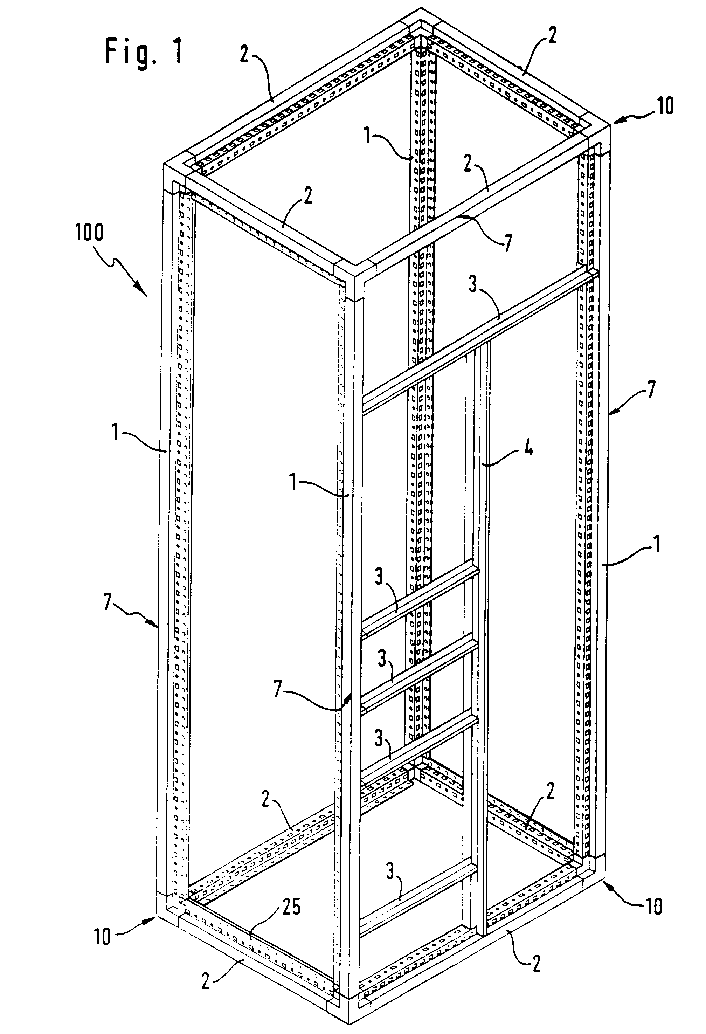

Der in Fig. 1 als Ganzes mit 100 bezeichnete Rahmen des erfindungsgemäßen Schaltschranks umfaßt vertikale Stützen 1 sowie waagerechte Holme 2, die längs den Kanten des mit Hilfe des Rahmens zu bildenden Schaltschrankgehäuses verlaufen. In dem Rahmen ist eine Anordnung von Querträgern 3 und Längsträgern 4 in die Frontseite eingesetzt, die der Vorbereitung des Schaltschranks für die Montage einer bestimmten Anordnung von elektrischen Schaltelementen dienen.

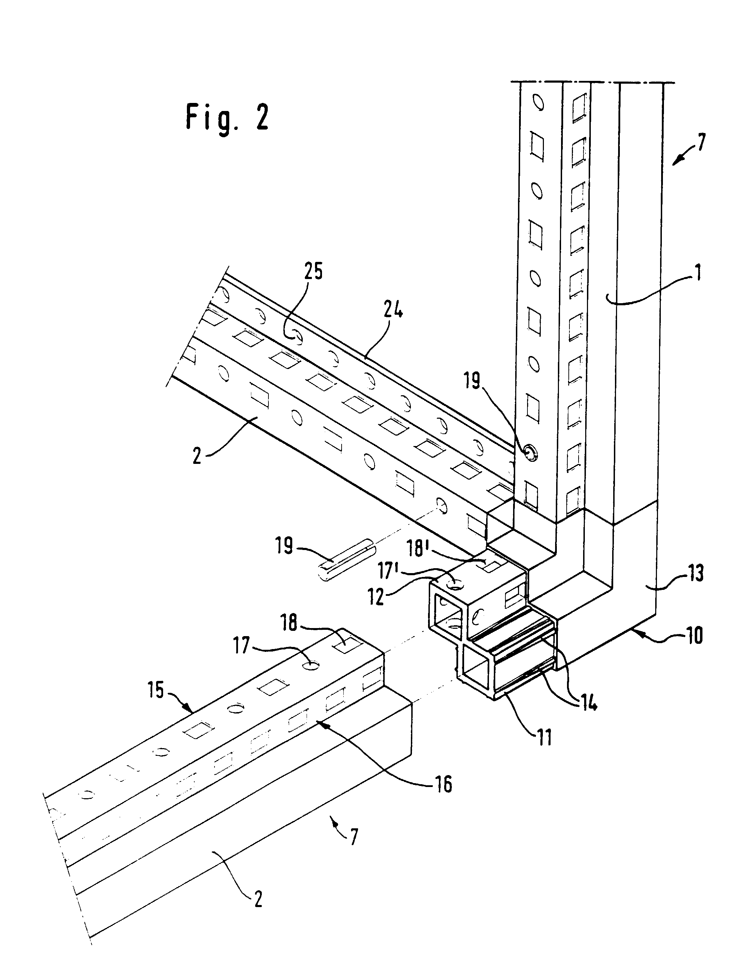

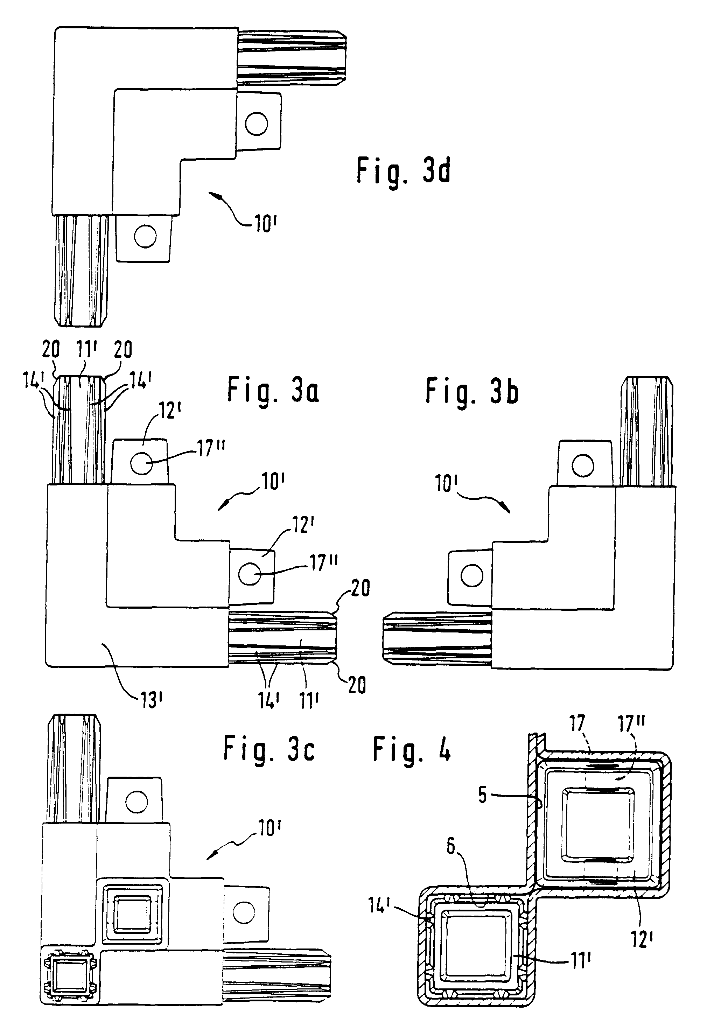

Der Verbindung der Stützen 1 und der Holme 2 in den Eckbereichen des Rahmens 100 dienen Eckverbinder 10, deren möglicher Aufbau anhand von Fig. 2 sowie von Fig. 3a bis 3d noch erläutert werden wird.

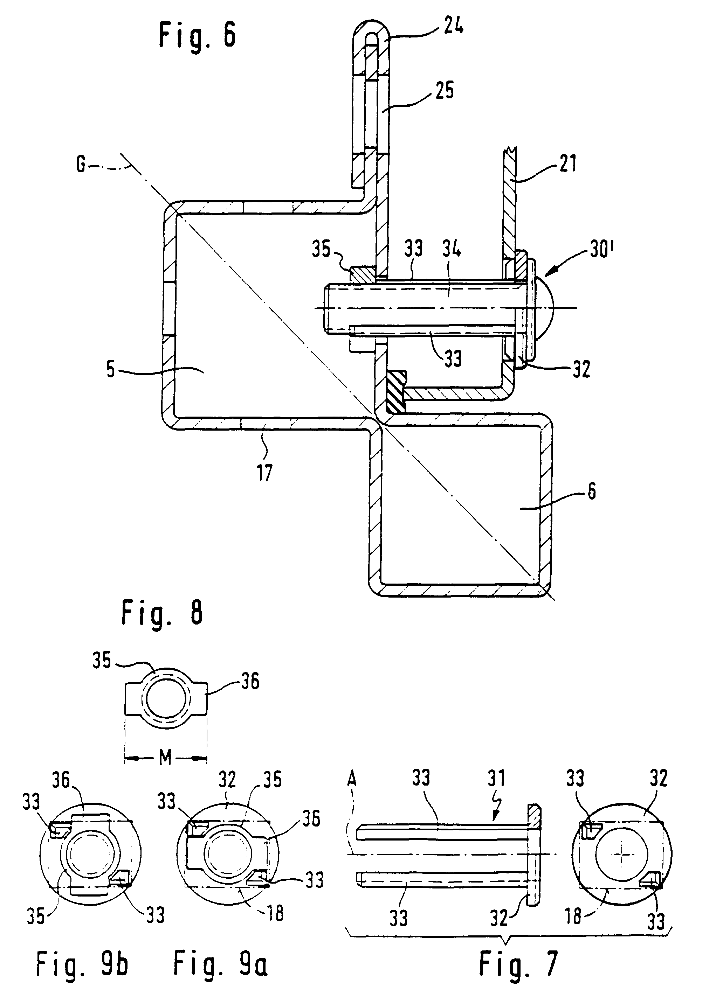

Die Stützen 1 und die Holme 2 weisen im Querschnitt ein doppeltquadratisches Profil auf, wobei die quadratischen Einzelquerschnitte derart ausgerichtet sind, daß jeweils eine ihrer Diagonalen auf einer gemeinsamen Geraden G liegen (vergleiche Fig. 6). Eine Stütze 1 bzw. ein Holm 2 besteht demnach im wesentlichen aus einem aus zwei Profilen quadratischen Querschnitts zusammengesetzten Doppelprofil, wobei diese Profile so angeordnet sind, daß die eine Kammer 5 dem Gehäuseinnern des Schaltschranks zugewandt ist, wogegen die zweite Kammer 6 einen bezüglich des Gehäuseinnern nach außen versetzten Eckbereich 7 des Schaltschranks bildet. Die Außenflächen der Stützen 1 bzw. der Holme 2 verlaufen dabei parallel bzw. senkrecht zu den Seitenflächen des Gehäuses.

Wie aus Fig. 2 ersichtlich ist, umfaßt eine erste Ausführungsform eines Eckverbinders 10 auf seinen der Befestigung von Stützen bzw. Holmen dienen Seiten jeweils einen äußeren und einen inneren Schenkel 11,12, deren Querschnitt an die Stützen bzw. Holme angepaßt und die somit in dieselben einführbar sind.

Um zu vermeiden, daß es aufgrund von Fertigungstoleranzen zu einem geringfügigen Spiel der Schenkel in den Stützen bzw. Holmen kommen kann, sind an dem äußeren Schenkel 11 sich zur Basis 13 des Eckverbinders hin sich in zunehmendem Maße erhebende Längsvorsprünge vorgesehen, die beim Aufschieben einer Stütze 1 oder eines Holmes 2 einen leichten Preßsitz desselben auf dem äußeren Schenkel 11 bewirken.

Die die innere Profilkammer 5 begrenzenden Seitenwände der Stützen 1 bzw. Holme 2 sind mit Lochreihen 15,16 versehen, von denen jeweils zwei einander gegenüberliegend angeordnete aus einer abwechselnden Folge von kreisrunden und rechteckigen Lochungen 17,18 bestehen. Der innere Schenkel 12 des Eckverbinders 10 ist ebenfalls mit Lochungen 17',18' versehen, welche im in die Stütze 1 bzw. den Holm 2 eingeschobenen Zustand des Schenkels mit den Lochungen 17,18 kommunizieren.

Der Sicherung von auf die Schenkel 11,12 eines Eckverbinders 10 aufgeschobenen Stützen 1 bzw. Holme 2 dienen Klemmstifte 19, welche in einander kommunizierende Lochungen 17,17' eingeschoben sind.

Eine weitere Ausführungsform eines Eckverbinders 10' ist in seinen verschiedenen Ansichten in den Fig. 3a bis 3d dargestellt. Er entspricht in seinem Aufbau prinzipiell demjenigen des in Fig. 2 erkennbaren, jedoch weisen die äußeren Schenkel 11' gegenüber den inneren Schenkeln 12' eine größere Länge auf und sie sind an ihrem freien Ende mit Fasen 20 versehen. Die Montage eines Eckverbinders 10' ist durch diese Maßnahmen gegenüber derjenigen eines Eckverbinders 10 wesentlich erleichtert, da einerseits die Fasen 20 selbstzentrierend wirken, andererseits durch die größere Länge des äußeren Schenkels 11' zunächst nur dieser in die äußere Profilkammer 6 eingeführt werden muß.

Um ein durch Fertigungstoleranzen eventuell bedingtes Spiel des äußeren Schenkels 11' in der Profilkammer 6 zu vermeiden, weist dieser wiederum zur Basis 13' des Eckverbinders 10' in ihrer Stärke zunehmende Längsvorsprünge 14' auf.

Die Festlegung des Eckverbinders 10' in einer Stütze oder einem Holm erfolgt wiederum mit Hilfe eines in der Zeichnung nicht dargestellten Klemmstifts, der in miteinander korrespondierende Lochungen 17,17" einführbar ist.

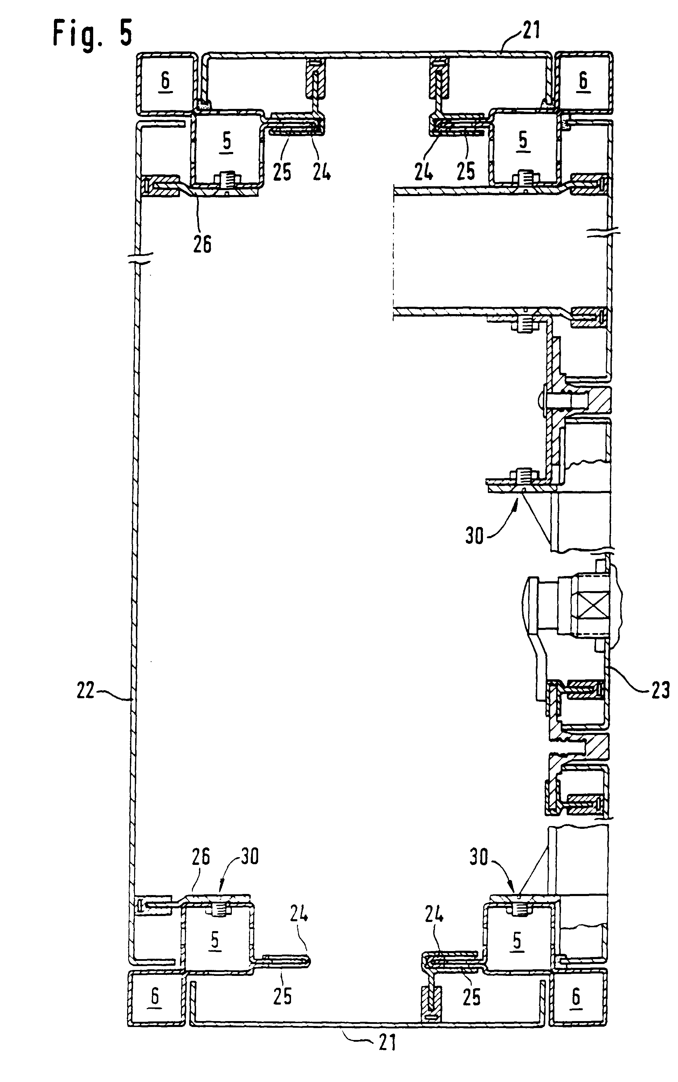

In Fig. 5 ist ein horizontaler Schnitt durch einen mit Seitenwänden 21, einer Rückwand 22 sowie einer Fronttür 23 ausgerüsteten Schaltschrank dargestellt. Zur Befestigung der Seitenwände 21 sind an den dem Gehäuseinnern zugewandten Teilen der Stützen 1 Profilvorsprünge 24 vorgesehen, welche sich über die gesamte Länge der Stützen 1 erstrecken und mit einer regelmäßigen Lochreihe 25 (s. Fig. 1 und 2) versehen sind. Die Profilvorsprünge 24, die selbstverständlich zur Festlegung des in der Zeichnung nicht dargestellten Bodens und des Deckels sowie den oberen und unteren Randbereichen der Seitenwände 21 und der Rückwand 22 auch an den Holmen 2 vorgesehen sind, dienen des weiteren der Anbringung von in der Zeichnung nicht erkennbaren Tiefentragschienen, welche für die Befestigung eines Geräteträgers zur Aufnahme von in den Schaltschrank einzusetzenden Schaltelementen vorgesehen werden können.

Wie weiterhin aus Fig. 5 ersichtlich ist, sind an der Rückwand 22 bzw. an der die Fronttür 23 lagernden Bauteilen Befestigungslaschen 26 vorgesehen. Diese dienen der Halterung dieser Bauteile an den Stützen 1 des Rahmens. Die Festlegung der Befestigungslaschen 26 erfolgt dabei durch den Eingriff von Schnellbefestigungselementen 30,30' in Lochungen der Lochreihe 16, deren Funktionsweise anhand von Fig. 6 bis 9b erläutert werden soll.

In Fig. 6 ist ein verlängertes Schnellbefestigungselement 30' erkennbar, welches in seiner Funktionsweise den in Fig. 5 dargestellten kurzen Schnellbefestigungselementen 30 entspricht. In dem in Fig. 6 dargestellten Beispiel dient es der Anbringung einer Seitenwand 21 an der dargestellten Stütze 1.

Das Befestigungselement 30' besteht im wesentlichen aus einem Arretiereinsatz 31, welcher eine gelochte Anlagescheibe 32 umfaßt, von welcher sich senkrecht zu deren Oberfläche symmetrisch zu einer die Lochmitte senkrecht schneidenden Achse A verlaufende Arretierbalken 33 erstrecken (s. Fig. 7).

In den Arretiereinsatz 31 ist eine Schraube 34 eingesetzt, auf die - bevor die gesamte Einheit zur Befestigung eines Bauteils Verwendung findet - eine Mutter 35 einige Gewindegänge auf die Schraube 34 aufgeschraubt ist.

Die Mutter 35 weist einander gegenüberliegend radial vorspringende Anschläge 36 auf, deren radial äußere Ränder zueinander einen Abstand M aufweisen, der derart bemessen ist, daß die Mutter bei Ausrichtung in Richtung der Längserstreckung in die rechteckigen Lochungen einsetzbar ist, bei Verdrehung der Mutter um 90° hingegen die Anschläge 36 die Schmalseite einer Lochung 25 überragen und somit die Wandung hintergreifen. Die Arretierbalken 33 des Arretiereinsatzes 31 sind dabei derart angeordnet, daß sie - einander diagonal gegenüberliegend - in eine Lochung einschiebbar sind und die Mutter in der in Fig. 9b dargestellten, die Lochungsränder hintergreifenden Position halten.

Die Montage eines Bauteils mit Hilfe des beschriebenen Befestigungselements 30' erfolgt daher in folgender Weise:

Zunächst wird die Mutter in eine Position gebracht, in der die Anschläge 36 in Längsrichtung einer rechteckigen Lochung ausgerichtet sind. Sie liegen dabei jeweils mit einem Seitenrand an einem Arretierbalken an (s. Fig. 9a). In diesem Zustand wird das vormontierte Schnellbefestigungselement 30' in das zu befestigende Bauteil 21 und in eine Lochung des Rahmens eingeschoben. Wird die Schraube 34 anschließend mit einem geeigneten Werkzeug betätigt, so dreht sich zunächst die Mutter in die in Fig. 9b dargestellte, durch die Arretierbalken begrenzte Stellung, in der ihre Anschläge 36 die Lochungslängsränder hintergreifen. Durch weiteres Anziehen der Schraube 34 wird daher das zu befestigende Bauteil 21 gegen den Rahmen 100 gezogen.

## Patentansprüche

1. Schaltschrank für elektrische Anlagen,
mit einem Gehäuse, das einen Hohlprofile umfassenden Rahmen (100) aufweist, dessen vertikale Stützen (1) und waagerechte Holme (2) längs den Kanten des Gehäuses verlaufen und zumindest teilweise einen Querschnitt aufweisen, bei dem ein Eckbereich (7) bezüglich des Gehäuseinnern nach außen versetzt ist, und
mit Eckverbindern (10,10'), die in die Enden der Stützen (1) und Holme (2) eingreifende Schenkel (11,12) umfassen,
**dadurch gekennzeichnet,**
daß die Eckverbinder (10,10') auf den der Befestigung von Stützen (1) bzw. Holmen (2) dienenden Seiten jeweils einen äußeren und einen inneren Schenkel (11,12) mit einem dem Querschnitt der Stützen (1) und Holme (2) angepaßten Profil aufweist, derart, daß die Schenkel sowohl in den dem Gehäuseinnern zugewandten Teil des Querschnitts als auch in den bezüglich des Gehäuseinnern nach außen versetzten Eckbereich (7) der Stützen (1) und Holme (2) eingreifen.

2. Schaltschrank nach Anspruch 1, **dadurch gekennzeichnet**, daß Gehäusewandungen (21,22,23) vorgesehen sind, die derart bemessen sind, daß sie in die jeweils von den nach außen versetzten Eckbereichen (7) begrenzten Ausschnitte des Rahmens (100) einsetzbar sind.

3. Schaltschrank nach Anspruch 1 oder 2, **dadurch gekennzeichnet**, daß die Eckbereiche senkrecht zur jeweils angrenzenden Gehäusewandung (21,22,23) verlaufende Profilabschnitte aufweisen.

4. Schaltschrank nach Anspruch 3, **dadurch gekennzeichnet**, daß die Eckbereiche (7) einen im wesentlichen quadratischen Querschnitt aufweisen.

5. Schaltschrank nach Anspruch 3, **dadurch gekennzeichnet**, daß die Eckbereiche (7) etwa den Querschnitt eines Viertelkreises aufweisen.

6. Schaltschrank nach einem der Ansprüche 1 bis 5, **dadurch gekennzeichnet,** daß der dem Gehäuseinnern zugewandte Teil des Querschnitts der Stützen (1) und Holme (2) einen im wesentlichen quadratischen Querschnitt aufweist.

7. Schaltschrank nach Anspruch 4 und 6, **dadurch gekennzeichnet**, daß die Diagonalen des dem Gehäuseinnern zugewandten Teils des Querschnitts und des Eckbereichs (7) auf einer gemeinsamen Geraden (G) liegen.

8. Schaltschrank nach einem der Ansprüche 1 bis 7, **dadurch gekennzeichnet**, daß die Eckverbinder (10,10') je Stütze (1) bzw. Holm (2) zwei separate Schenkel (11,12;11'12') umfassen, von denen einer in den dem Gehäuseinnern zugewandten Teil des Querschnitts, der andere in den Eckbereich (7) eingreift.

9. Schaltschrank nach einem der Ansprüche 1 bis 8, **dadurch gekennzeichnet**, daß an einander gegenüberliegenden Seiten zweier benachbarter Stützen (1) oder Holme (2) sich im wesentlichen über die gesamte Länge des dem Gehäuseinnern zugewandten Teils der Stütze (1) oder des Holms (2) erstreckende Profilvorsprünge (20) vorgesehen sind.

10. Schaltschrank nach Anspruch 9, **dadurch gekennzeichnet,** daß jeweils benachbarte Profilvorsprünge (24) einander zugewandt sind, derart, daß diese auf einer gemeinsamen Ebene liegen, die parallel zu einer Schmalseite des Gehäuses verläuft.

11. Schaltschrank nach Anspruch 9 oder 10, **dadurch gekennzeichnet**, daß die Profilvorsprünge mit regelmäßigen Lochreihen versehen sind.

12. Schaltschrank nach einem der Ansprüche 6 bis 11, **dadurch gekennzeichnet**, daß die den dem Gehäuseinnern zugewandten Teile des Querschnitts begrenzenden Seitenwandungen der Stützen (1) und Holme (2) regelmäßige Lochreihen (15,16) aufweisen.

13. Schaltschrank nach Anspruch 12, **dadurch gekennzeichnet,** daß zumindest ein Teil der Lochreihen (15) aus abwechselnd angeordneten kreisrunden (17) und rechteckigen (18) Lochungen bestehen.

14. Schaltschrank nach Anspruch 13, **dadurch gekennzeichnet**, daß die in die dem Gehäuseinnern zugewandten Teile die Stützen (1) und Holme (2) eingreifenden Schenkel (12) der Eckverbinder (10) zumindest eine im Querschnitt kreisrunde Lochung (17') aufweisen, die mit einer kreisrunden Lochung (17) der Stütze bzw. des Holms kommuniziert.

15. Schaltschrank nach Anspruch 14, **dadurch gekennzeichnet**, daß zur Fixierung der Eckverbinder (10) in den Stützen (1) und Holmen (2) ein in die kommunizierenden Lochungen (17,17') einführbarer Klemmstift (19) dient.

## Claims

1. Switchgear cabinet for electrical installations,
with a housing which has a frame (100) made up of hollow sections and of which the vertical columns (1) and horizontal beams (2) extend along the edges of the housing and have at least partially a cross-section by which a corner region (7) is offset outwards in relation to the interior of the housing, and
with corner connectors (10, 10') which have limbs (11, 12) engaging in the ends of the columns (1) and beams (2),
**characterised in that**
the corner connectors (10, 10') each have on those sides which serve for attachment of columns (1) and beams (2) a respective outer and inner limb (11, 12) having a profile matched to the cross-section of the columns (1) and beams (2), in such a way that the limbs engage both in the portion of the cross-section facing towards the interior of the housing and also in the corner region (7) of the columns (1) and beams (2) which are offset outwards with respect to the interior of the housing.

2. Switchgear cabinet according to claim 1, **characterised in that** housing walls (21, 22, 23) are provided, which are of such dimensions that they can be inserted in the portions of the frame (100) bounded respectively by the outwardly offset corner regions (7).

3. Switchgear cabinet according to claim 1 or 2, **characterised in that** the corner regions have profile portions extending perpendicular to the respective bounding housing wall (21, 22, 23).

4. Switchgear cabinet according to claim 3, **characterised in that** the corner regions (7) have a substantially square cross-section.

5. Switchgear cabinet according to claim 3, **characterised in that** the corner regions (7) have substantially the cross-section of a quadrant of a circle.

6. Switchgear cabinet according to one of claims 1 to 5, c**haracterised in that** the part of the cross-section of the columns (1) and beams (2) which faces towards the interior of the housing has a substantially square cross-section.

7. Switchgear cabinet according to claim 4 and 6, **characterised in that** the diagonals of the part of the cross-section facing towards the interior of the housing and of the corner region (7) lie on a common straight line (G).

8. Switchgear cabinet according to one of claims 1 to 7, **characterised in that** the corner connectors (10, 10') each include two separate limbs (11, 12;11' 12') per column (1) or beam (2), of which one engages in the part of the cross-section facing towards the interior of the housing and the other engages in the corner region (7).

9. Switchgear cabinet according to one of claims 1 to 8, c**haracterised in that** on mutually opposite sides of two adjacent columns (1) or beams (2) profile projections (20) are provided, extending substantially over the entire length of the part of the column (1) or of the beam (2) which faces towards the interior of the housing.

10. Switchgear cabinet according to claim 9, **characterised in that** respective adjacent profile projections (24) are arranged facing towards one another in such a way that they lie in a common plane which extends parallel to a shorter side of the housing.

11. Switchgear cabinet according to claim 9 or 10, **characterised in that** the profile projections are provided with rows of regularly spaced holes.

12. Switchgear cabinet according to one of claims 6 to 11, **characterised in that** the side walls of the columns (1) and beams (2) which bound the parts of the cross-section which face towards the interior of the housing have rows of regularly spaced holes (15, 16).

13. Switchgear cabinet according to claim 12, **characterised in that** at least some of the rows of holes (15) comprise alternately arranged round (17) and rectangular (18) holes.

14. Switchgear cabinet according to claim 13, **characterised in that** the limbs (12) of the corner connectors (10) which engage in the parts of the columns (1) and beams (2) which face towards the interior of the housing have at least one hole (17') which is round in cross-section and which communicates with a round hole (17) in the column or the beam.

15. Switchgear cabinet according to claim 14, **characterised in that** a clamping pin or peg (19) which can be inserted into the communicating holes (17, 17') serves for locating the corner connectors (10) in the columns (1) and beams (2).

## Revendications

1. Armoire de commutation pour installation électrique, comprenant :
• un boîtier qui présente un cadre (100) entourant des profilés creux, cadre dont les montants verticaux (1) et les traverses horizontales (2) s'étendent le long des arêtes du boîtier et présentent au moins en partie une section transversale, dans laquelle une zone d'angle (7) est déportée vers l'extérieur par rapport à l'intérieur du boîtier, et
• des éléments angulaires de liaison (10, 10'), qui comprennent des branches (11, 12) qui viennent en prise dans les extrémités des montants (1) et des traverses (2),
caractérisée en ce que
les éléments angulaires de liaison (10, 10') présentent sur les côtés qui servent à fixer des montants (1) ou des traverses (2) respectivement une branche extérieure et une branche intérieure (11, 12) avec un profil qui est adapté à la section transversale des montants (1) et des traverses (2), d'une manière telle que les branches viennent en prise aussi bien dans la partie de la section transversale tournée vers l'intérieur du boîtier, que dans la zone d'angle (7) des montants (1) et des traverses (2) déportée vers l'extérieur par rapport à l'intérieur du boîtier.

2. Armoire de commutation selon la revendication 1,
caractérisée en ce qu'
on prévoit des parois pour le boîtier (21, 22, 23), qui sont dimensionnées de telle manière qu'elles puissent être insérées dans les sections du cadre (100) qui sont respectivement délimitées par les zones d'angle (7) déportées vers l'extérieur.

3. Armoire de commutation selon la revendication 1 ou 2,
caractérisée en ce que
les zones d'angle présentent des sections profilées qui s'étendent perpendiculairement aux parois respectivement adjacentes du boîtier (21, 22, 23).

4. Armoire de commutation selon la revendication 3,
caractérisée en ce que
les zones d'angle (7) présentent une section transversale de forme sensiblement carrée.

5. Armoire de commutation selon la revendication 3,
caractérisée en ce que
les zones d'angle (7) présentent à peu près la section transversale d'un quart de cercle.

6. Armoire de commutation selon l'une des revendication 1 à 5,
caractérisée en ce que
la partie de la section transversale des montants (1) et des traverses (2) qui est tournée vers l'intérieur du boîtier présente une section transversale sensiblement carrée.

7. Armoire de commutation selon les revendications 4 et 6,
caractérisée en ce que
les diagonales de la partie tournée vers l'intérieur du boîtier de la section transversale et de la zone d'angle (7) se trouvent sur une ligne droite commune (G).

8. Armoire de commutation selon l'une des revendication 1 à 7,
caractérisée en ce que
les éléments angulaires de liaison (10, 10') comprennent respectivement pour chaque montant (1) ou traverse (2) deux branches séparées (11, 12; 11', 12'), dont l'une vient en prise dans la partie de la section transversale, tournée vers l'intérieur du boîtier, l'autre dans la zone d'angle (7).

9. Armoire de commutation selon l'une des revendication 1 à 8,
caractérisée en ce qu'
on prévoit sur les côtés se faisant vis-à-vis de deux montants voisins (1) ou de deux traverses (2) des saillies de profilés (20) qui s'étendent sensiblement sur toute la longueur de la partie, tournée vers l'intérieur du boîtier, du montant (1) ou de la traverse (2).

10. Armoire de commutation selon la revendication 9,
caractérisée en ce que
des saillies de profilés respectivement voisines (24) sont tournées l'une vers l'autre d'une manière telle que celles-ci se trouvent dans un plan commun, qui s'étend parallèlement à un côté étroit du boîtier.

11. Armoire de commutation selon la revendication 9 ou 10,
caractérisée en ce que
les saillies des profilés sont pourvues se séries de trous espacés régulièrement.

12. Armoire de commutation selon l'une des revendication 6 à 11,
caractérisée en ce que
les parois latérales des montants (1) et des traverses (2) qui délimitent les parties de la section transversale, tournées vers l'intérieur du boîtier, présentent des séries de trous (15, 16) espacés régulièrement.

13. Armoire de commutation selon la revendication 12,
caractérisée en ce que
au moins une partie des séries de trous (15) consiste en des trous circulaires (17) et rectangulaires (18), qui sont disposés alternativement .

14. Armoire de commutation selon la revendication 13,
caractérisée en ce que
les branches (12) des éléments angulaires de liaison (10), qui viennent en prise dans les parties tournées vers l'intérieur du boîtier des montants (1) et des traverses (2), présentent au moins un trou (17') dont la section transversale est circulaire, et qui communique avec un trou circulaire (17) du montant ou de la traverse .

15. Armoire de commutation selon la revendication 13,
caractérisée en ce que
pour fixer les éléments angulaires de liaison (10) dans les montants (1) et dans les traverses (2) on utilise une broche de serrage (19) que l'on peut introduire dans les trous (17, 17') qui communiquent.
